# EUROPEAN PATENT APPLICATION

(11) **EP 0 814 425 A2**
(43) Date of publication of application: **29.12.1997**
(21) Application number: 97304188.2
(22) Date of filing: 16.06.1997
(51) Int. Cl.: G06K 15/02

(54) **Method for creating complex layouts with variable data for high speed printing systems**

(30) Priority: 18.06.1996 US 665567
(71) Applicant: Scitex Digital Printing, Inc., Dayton, Ohio 45420-4099 (US)
(72) Inventor: Desautels, John E., Centerville, Ohio 45459 (US); Hickey, John S., West Carrollton, Ohio 45449 (US); Pratt, Richard L., Dayton, Ohio 45431 (US); Reichard, David G., Centerville, Ohio 45458 (US); Somerville, Charles M., Huber Heights, Ohio 45424 (US); Kochanowsky, Eugene W., Tallahassee, Florida 32308 (US); Brooks, Minton L., Wauwatosa, Wisconsin 53213 (US); Alexander, Mark A., Tallahassee, Florida 32308 (US); Hern, Brian F., Tallahassee, Florida 32308 (US); Brunson, Eric M., Boulder, Colorado 80301 (US); Tobin, Warwick A., Tallahassee, Florida 32308 (US); Shin, Young A., Tallahassee, Florida 32313 (US)
(74) Representative: Freed, Arthur Woolf

(57) **Abstract**

A method is provided for creating complex document layouts with variable data. The document layouts are placed on a web template associated with a high speed printing system. A merged data stream is generated, containing fixed and variable data as input job data, and is output on the high speed printing system. Initially, multiple layouts of document formats are created. Insertion of variable data placeholders into the multiple layouts is specified. The variable data is then merged into an appropriate one of the multiple layouts at the location of the placeholders.

## Description

### Technical Field

The present invention relates to high speed variable data printing systems, and, more particularly, to an integrated system for allowing a user to create complex layouts with variable data for high speed printing systems.

### Background Art

Commercial high speed variable data printing systems comprise ink jet, laser and several other printing technologies. In continuous ink jet printing, electrically conductive ink is supplied under pressure to a manifold region that distributes the ink to a plurality of orifices, typically arranged in a linear array(s). The ink discharges from the orifices in filaments which break into droplet streams. Individual droplet streams are selectively charged to substantially two levels in the region of the break off from the filaments and charged drops are deflected from their normal trajectories. Either the deflected drops or the undeflected drops are caught and recirculated, and the other drops are allowed to proceed to a print medium.

Laser high speed printing systems create variable data printing systems with a combination of a digitally switched, scanning laser beam and office copier technology. Office copiers charge a photoconductor in the dark. The photoconductor holds charge in the dark, but discharges when illuminated. When a charged photoconductor is exposed to an image, the dark areas of the image retain their charge, and the illuminated areas discharge. The result is a latent image charge pattern on the photoconductor. The latent image is developed by bringing small, oppositely charged particles called toner into contact with the latent image. The charged particles stick to the photoconductor in the charged areas, creating a visible toned image. The image receiver is placed over the toned image, and charged to attract the image to the substrate. A subsequent heating system melts the toner, fixing it to the receiver. In the laser printer, the exposure system has a scanning laser beam which is switched on and off to form the image.

The traditional method of creating job files for high speed variable data printing systems, such as ink jet and laser, is to run a batch job on a mainframe or PC using some type of parameter driven or Script language to create the layout and merge the variable and fixed data to generate the proper output file. The user sets up and executes the jobs through text commands and does not see the results of the job until either the operator previews the job from a terminal, proofs selected documents to hard copy printer, or prints selected documents in the job on the target high-speed printing system.

With the advent of desktop publishing and the ease of use of software like QuarkXPress and Aldus Pagemaker for creating complex layouts with fixed text and graphics for brochures, magazines and books, the direct mail marketplace began to demand similar tools for their applications. The personalized mass mailing industry desires tools that can expedite the positioning of fixed text and graphics with variable data inserts, allowing the user to view the results of the work as the layouts are built up. It is also desired that these tools allow the user to see the wordwrap with the insertion of various instances of the variable data. In addition, the process of actually merging the variable data into the layouts and flowing the text has to be fast enough to support high speed systems, such as the Scitex 3600 system, manufactured at Scitex Digital Printing Systems, Inc., of Dayton, Ohio, which prints 100% variable data at speeds of 1000 ft./min. This generally requires the merge process to run at three times the speed of the printing, as a minimum. Otherwise, the work prepared in a single shift would not be sufficient to keep the printer running for three shifts, which is typically the requirement.

It is seen then that there exists a need for an improved system for allowing a user to create complex layouts, which is usable with high speed variable data printing systems.

### Summary of the Invention

This need is met by the totally integrated system according to the present invention, wherein a method is provided to allow a printing system user to create complex layouts. This method for the design of complex layouts includes insertion of variable data placeholders into the layouts for direct mail and lottery applications. The user is allowed, in a single system, to design layouts, specify insertion of variable data, and merge the variable data with the layouts from end-user supplied data bases. Specifically, the layouts are created using QuarkXPress and the variable data placeholders are inserted using an XTension to QuarkXPress. Conditionally printing individual or grouped QuarkXPress elements, and conditionally altering the appearance of the entire layout depending on the contents of the variable data is also specified using the XTension. A simple mouse operation allows the user to easily link layouts and elements with conditions that are evaluated as true or false for each document during the merge process using a mapping language on a merge station. Placement of the layouts on a web template is done through a graphical user interface (GUI) that displays the web template printheads for high speed printing systems. The merging of variable data into the layouts at the location of the placeholders produces proof outputs or print files in a desired data format. The data is produced fast enough for a high speed printer, printing at a rate, for example, of 1000 feet/minute.

In accordance with one aspect of the present invention, a method is provided for creating complex document layouts with variable data. The document layouts are placed on a web template associated with a high speed printing system. A merged data stream is generated, containing fixed and variable data as input job data, and is output on the high speed printing system. Initially, multiple layouts of document formats are created. Insertion of variable data placeholders into the multiple layouts is specified. The variable data is then merged into an appropriate one of the multiple layouts at the location of the placeholders.

Accordingly, it is an object of the present invention to provide a totally integrated system usable with a high speed printing system. It is a further object of the present invention to provide such a system which is easy to use and integrates desktop publishing with high speed variable data printing. Finally, it is an object of the present invention to allow a user to create complex layouts for high speed printing systems.

Other objects and advantages of the invention will be apparent from the following description, the accompanying drawings and the appended claims.

### Brief Description of the Drawings

Fig. 1 is a flow chart block diagram illustrating the system flow according to the present invention;
Fig. 2 is a flow chart block diagram detailing data merge and data flow features of the present invention.

### Detailed Description of the Preferred Embodiments

The present invention is unique because it solves the problem of ease of use and performance by integrating desktop publishing with high speed variable data printing in an innovative way. High speed printing systems (HSPS), such as, for example, systems developed and manufactured by Scitex Digital Printing, Systems, Inc., of Dayton, Ohio, are self-contained systems for printing personalized direct mail advertising, bills, packaging, subscriptions, catalogs, business forms, lottery tickets, and many other high volume applications. Such systems use ink jet technology to produce images on a web, usually paper, moving at speeds of up to 1000 feet (305 meters) per minute. High speed printing systems use any of a variety of sized printheads, such as, for example, 4.27 inches (10.8 centimeters), 10.7 inches (27.1 centimeters), or 13.3 inches (33.8 centimeters) wide. The HSPS can print anywhere on a document, using a variety of type styles, point sizes, ink colors, and special effects.

Images are formed on the web by individual drops of ink released by a printhead at a density of 120 drops per inch or 240 drops per inch. The HSPS uses continuous jet technology, in which the printhead releases a continuous stream of ink drops. Drops that are needed to form an image fall onto the web, while drops that are not needed receive an electric charge and are deflected into a catcher, for recirculation.

High speed printing systems, such as the Scitex systems, perform a number of tasks while printing. These tasks include reading files from magnetic tape or a file server containing data and formatting commands; formatting data according to the commands; converting the formatted data to bitmaps; and printing the resulting bit-mapped images.

In a preferred embodiment of the present invention, the input file data includes text and graphics for documents that have been created using QuarkXPress and XTensions to QuarkXPress. QuarkXPress combines word processing, typesetting, page layout, drawing, image control, and document construction in a single program. QuarkXPress allows for add-on units or modules called XTensions that add functionality to the program. Developers around the world have been creating custom XTensions.

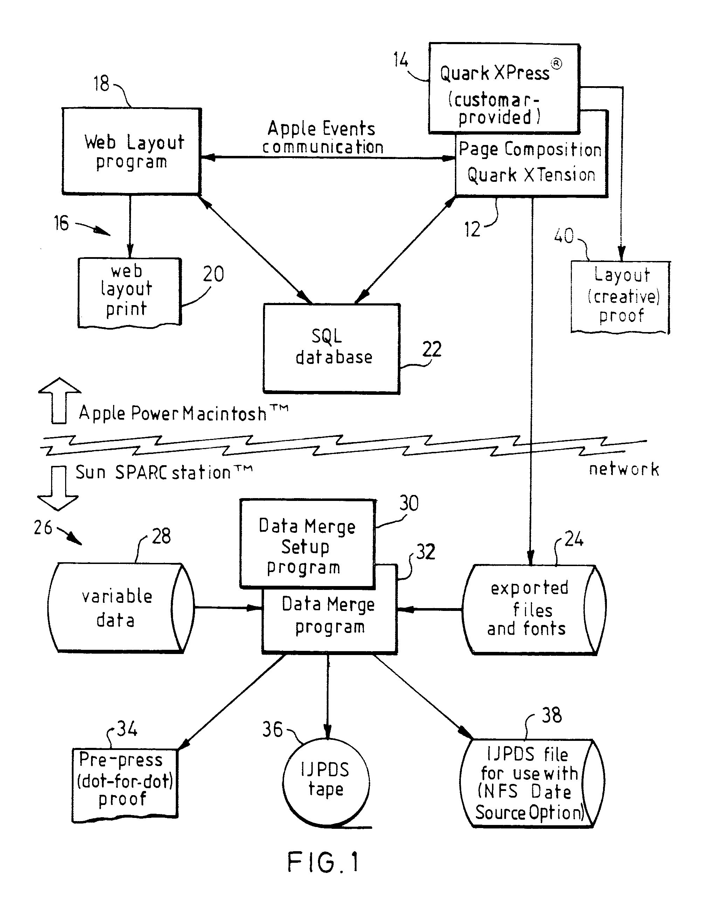

Referring now to Fig. 1, there is illustrated a flow chart block diagram 10 of the system flow according to the present invention. Using an XTension 12 developed in accordance with the present invention, variable data can be combined with the powerful design and layout tools in QuarkXPress, as shown in block 14. A powerful GUI, preferably running under a PowerMac operating system, allows the designer to position printheads relative to a representation of the web and place the layouts on a web template, as shown by blocks 18 and 20. By capturing job information in a structured query language (SQL) database 22, files that describe the entire job and its elements can be exported, via block 24, from a web layout and page composition system 16 to a work station 26, such as a SunSPARCstation, well known to those skilled in the art as a work station model. The work station 26 also receives variable data 28, which combines with the exported files and fonts 24, as instructed by data merge setup 30 and implemented by data merge 32, according to the present invention. The data merge software, its mapping language and other user-programmable features, provide a capability for performing arbitrarily complex data reformatting (case conversion, word concatenation, etc.) and logical condition evaluation when processing input variable data 28, reflowing text based on variable data insertion, and selecting appropriate elements based on evaluation of conditionals, while maintaining the performance needed to support high speed printing systems, such as systems running at 1000 ft./min. The information can then be printed, relayed to tape, or provided as a datastream, as indicated by blocks 34, 36 and 38, respectively.

The system of the present invention efficiently integrates desktop publishing with high-speed printing technology to create the fastest, easiest, and most efficient process for designing creative direct mail, forms, lottery tickets and other applications. Integratable units have been created in accordance with the present invention to operate with high-speed printers. The integratable units comprise web layout and page composition units 12 and 18 and data merge units 30 and 32.

The web layout and page composition units 12 and 18 may be run on any suitable operating system, such as a PowerMac operating system. The data merge units 30 and 32 can be run on any suitable work station, such as a SunSPARCstation under UNIX. The integratable units can be operated independently of one another and linked over a network.

In a preferred embodiment of the present invention, the page composition portion 12 operates with QuarkXPress for a PowerMac operating system. In such an environment, the page composition unit 12 may include a QuarkXPress XTension to handle the placement of variable text and graphics, and ensure that the layout conforms to the requirements of the imager. The unique graphical user interface of the present invention enables users to see the document being created in relation to the web, a preprint, and the high speed printing system printheads. Fixed data, variable data placeholders, rendered fonts, and other configuration and job data are stored in exported files and fonts location 24 as a collection of merge files that can be sent via a network for input to the data merge process.

The web layout and page composition units 12 and 18 of the present invention give the designer an array of commercially available graphic design tools from which to choose. Industry standard typesetting fonts, such as TrueType and Type 1 fonts, supporting the power and flexibility of scaleable outline fonts, are utilized to give the ability to instantly scale and fit text for optimum effect. Proofing stations 40, i.e., hard copy printouts, allow the designer to see a creative proof of the design of the layouts. It is also easy to make adjustments on a computer screen, for example, with the click of a mouse. Variable text or entire layouts can be rotated at ninety degree angles, and graphics can be imported from any standard bit-map format generated by off-the-shelf software programs, for example, Adobe Illustrator, Adobe Photoshop, CorelDRAW and Aldus FreeHand.

The web layout and page composition units 12 and 18 offer a number of features in accordance with the present invention. For example, the present invention allows for the selection of web template configurations and graphical representation of positions and colors of printheads. Interactive design and layout of multiple document formats is possible using, for example, QuarkXPress. The web layout and page composition units also allow for positioning of QuarkXPress documents on the web template. Support for split web and top of form offset, control of page buffer processing, and selection and use of scalable fonts is all possible using the web layout and page composition features of the present invention.

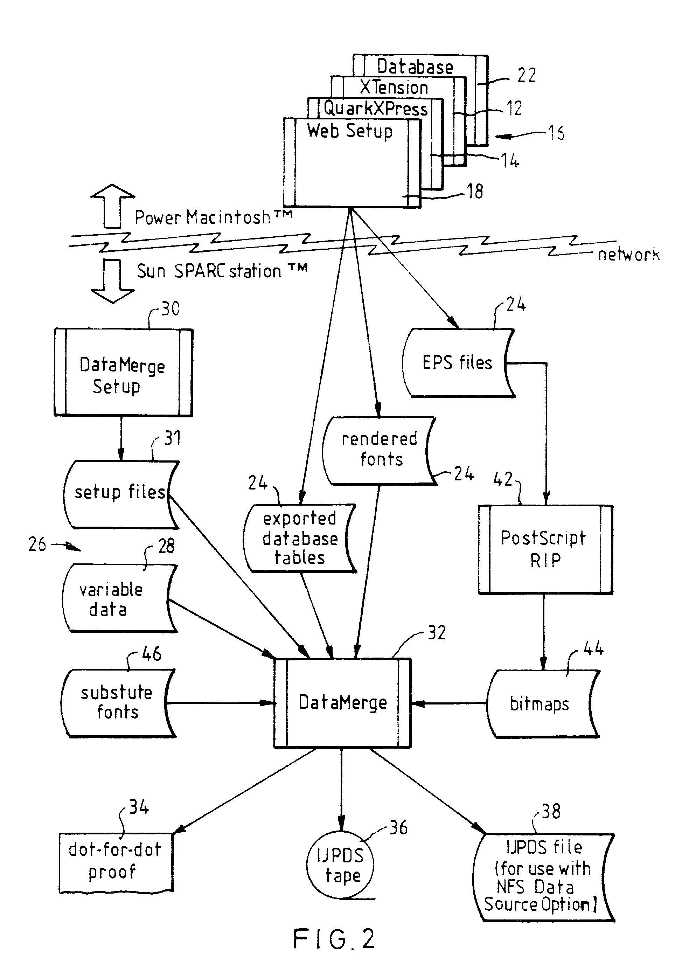

As illustrated in Fig. 2, encapsulated post script files from exported files and fonts block 24 are converted to raster form at raster image processor 42, typically using a commercially available software program. Rendering of all outline fonts to bitmaps at block 44 is also possible with the work station 26. Additionally, separate fonts can be chosen and input, via substitute fonts block 46, to replace some of the exported fonts of block 24. Creation of a font cache and performance of font management is achieved such that previously rendered and cached fonts are not rendered again. Font usage and memory management monitoring and reporting through a meter display can be accomplished with the present invention.

The web layout and page composition features of the present invention also allow for definition of conditional tests and cases; identification and conversion of graphic elements; positioning and styling of variable field placeholders within the documents, including selection of spot color; and generation of creative proofs on a desktop printer. Also possible is the checking of job elements for compliance with printing requirements. Utilization of a database to store information on the structure of a job can be accomplished with the present invention. Finally, the web layout and page composition units 12 and 18 are fully internationalized and localized for foreign applications, such as Japanese.

Similarly, the data merge units 30 and 32 offer multiple features in accordance with the present invention. Setup files 31 are prodiced by data merge setup 30. These units allow for the conversion of graphic elements to fonts. These units also provide a definition of variable data input streams from any source including disk or tape. The data merge features include a mapping language for associating the fields in the input data records with the variable data placeholders and conditional selection of document formats and elements. Functions can be supplied for performing general purpose operations on the variable data such as case conversion and field concatenation. Programmer tools that include items such as sample mapping can be accommodated. The data merge features also allow for generation of dot-for-dot proofs of fully composed documents with variable inserts and merging of fixed and variable data with text reflow for each document with variable inserts. Finally, the data merge features allow for the creation of various file formats that include fonts, fixed information as text and graphics, and variable data for each document in a job.

As stated, the web layout and page composition units 12 and 18 of the present invention give the designer an array of commercially available graphic design tools from which to choose. Once data merge files have been created in the design process, they are transferred to the data merge process. The data merge files are input to data merge unit 32. The data merge process also features simplified on-screen data preview capabilities which are easy to understand and operate. Input of variable data can be handled from multiple sources such as two input tape units. Data verification, testing and editing of the data can be programmed on the screen. In a preferred embodiment of the present invention, data merge operates on an open systems UNIX platform, providing powerful hardware options and allowing for multiple design stations to be linked to the data merge process.

The merge process reflows all the data with the actual variables inserted at the appropriate locations in the correct format or template based on conditional selections as defined in a "mapping language". The mapping language provides a means for the user to associate the actual fields in the input data, which may come from a media such as tape, to the corresponding variable placeholders in the designer's layout document. The mapping language also allows conditional tests to be performed on the input data fields and provides the capability to modify the input data. Multiple input files may be read under control of the mapping language in order to process data as needed for use in variable placeholders and conditional processing. User callable routines, programmed in a language such as "C", can be linked to the merge software for performing custom user functions.

A feature of the merge process allows for the creation of a "fixed file", a unique capability of Scitex high-speed ink jet systems, that stores reusable text strings that can be referenced by commands in the output data. This greatly reduces the amount of data that is produced as output for each document. All of the reflowed lines are no longer variable data, but are comprised of variable data with references to the fixed file data.

The system according to the present invention dramatically streamlines the entire design and data preparation process, improving the overall quality and efficiency of variable data imaging. The invention is fully international and supports double byte character sets. A Japanese localized version and an English version are also both supported by the present invention. For support of the double byte character sets, a font caching system, such as may be installed on the PowerMac, provides a means for storing rendered fonts and reusing them in multiple jobs without requiring performing of the font rendering each time. Also, user defined characters can be added to existing fonts.

The present invention provides a method for designing direct mail pieces with variable data that allows a user in a single system to design layouts and specify insertion of variable data, and merge the variable data with layouts from end user supplied data bases.

### Industrial Applicability and Advantages

The present invention is useful in the field of high speed printing, such as ink jet printing, and has the advantage of dramatically streamlining the entire design and data preparation process. The present invention has the further advantage of improving the overall quality and efficiency of variable data imaging. It is yet another advantage of the present invention that the software is a fully international version that supports double byte character sets.

Having described the invention in detail and by reference to the preferred embodiment thereof, it will be apparent that other modifications and variations are possible without departing from the scope of the invention defined in the appended claims.

## Claims

1. A method for creating complex documents for placement on a web to output on a high speed printing system, the method comprising the steps of:
creating multiple layouts of document formats;
specifying insertion of variable data placeholders, indicating selected locations for variable data, into the multiple layouts; and
merging the variable data into an appropriate one of the multiple layouts at the location of the placeholders.

2. A method for creating complex documents as claimed in claim 1 further comprising the steps of:
generating a merged data stream containing fixed and variable data, wherein the fixed and variable data comprises input job data,
using web layout and page composition units to export the input job data to a work station, wherein the web layout and page composition units are integratable with data merge units and the data merge units are usable to create a fixed file; and
inputting the merged data stream to the high speed printing system.

3. A method for creating complex documents as claimed in claim 1 wherein the step of creating multiple layouts comprises the step of using desktop publishing tools.

4. A method for creating complex documents as claimed in claim 1 wherein the step of creating multiple layouts further comprises the step of creating multiple layouts of document formats on a blank background.

5. A method for creating complex documents as claimed in claim 1 wherein the step of creating multiple layouts further comprises the step of creating multiple layouts of document formats relative to a preprint that has been stored as a bitmap.

6. A method for creating complex documents as claimed in claim 1 further comprising the step of placing the multiple layouts on a web template associated with the high speed printing system.

7. A method for creating complex documents as claimed in claim 1 further comprising the steps of:
positioning printheads relative to a representation of the web; and
placing the multiple layouts on a web template.

8. A method for allowing a printing system user to create complex layouts, the method comprising the steps of:
designing a plurality of layouts;
specifying insertion of variable data into the plurality of layouts; and
merging the variable data with the plurality of layouts from end-user supplied data bases.

9. A method for allowing a printing system user to create complex layouts as claimed in claim 8 further comprising the step of using desktop publishing tools to create the plurality of layouts and insert the variable data.

10. A method for allowing a printing system user to create complex layouts as claimed in claim 8 further comprising the step of using a graphical user interface to place the plurality of layouts on a web template.
